# EUROPEAN PATENT APPLICATION

(11) **EP 3 528 352 A1**
(43) Date of publication of application: **21.08.2019**
(21) Application number: 17860251.2
(22) Date of filing: 11.10.2017
(51) Int. Cl.: H01S 3/10, B23K 26/00, G02F 1/35, G02F 1/37, H01S 3/067

(54) **LASER DEVICE**

(30) Priority: 11.10.2016 JP 2016200359
(71) Applicant: Fujikura Ltd., Tokyo 135-8512 (JP)
(72) Inventor: SUZUKI, Ren, Sakura-shi Chiba 285-8550 (JP); TAKAHASHI, Shohei, Sakura-shi Chiba 285-8550 (JP)
(74) Representative: Cabinet Plasseraud
(86) International application number: PCT/JP2017/036795
(87) International publication number: WO 2018/070412

(57) **Abstract**

Included are a light source 10 capable of emitting infrared light by switching the infrared light between pulsed light and continuous light, and a wavelength conversion element 50 for wavelength-converting infrared light having an intensity equal to or higher than a first threshold value into visible light. The pulsed light has an intensity equal to or higher than the first threshold value. The continuous light has an intensity less than the first threshold value. Laser light including infrared light is emitted via the wavelength conversion element 50. The pulsed light is thereby emitted when an irradiation position of the laser light is confirmed, and the continuous light is emitted at the time of processing with laser light. As a result, visible light is emitted when an irradiation position of laser light is confirmed, and a processing object is irradiated with laser light in which wavelength conversion into visible light is suppressed at the time of processing with laser light.

## Description

### Technical Field

The present invention relates to a laser device, and specifically to a laser device for easily performing processing with laser light after confirming an irradiation position of the laser light.

### Background Art

A processing method using laser light is prevailing because processing accuracy and processing speed are excellent in processing a metallic material or the like. Among such laser devices used for such processing, a fiber laser device has attracted attention because of having high energy efficiency and a small laser light spot diameter. As the fiber laser device, a device is known which includes a resonator including a reflection member such as a fiber Bragg grating (FBG) at both ends of an amplification optical fiber containing a rare earth element such as ytterbium (Yb) and causes pumping light to enter the resonator to cause signal light to oscillate. In a high power fiber laser device, a structure is generally used in which pumping light emitted from a plurality of light sources is multiplexed by an optical combiner and then caused to enter a resonator.

Some of such fiber laser devices use laser light in an infrared light region. However, infrared light cannot be visually recognized as it is. Therefore, it may be difficult to perform processing with laser light after confirming an irradiation position of the laser light. Therefore, for example, a method for confirming an optical axis position such as an optical axis position adjusting method disclosed in the following Patent Literature 1 has been proposed. The following Patent Literature 1 discloses a method for converting the wavelength of laser light emitted from a laser oscillator into a wavelength in a visible wavelength region by a wavelength conversion element and adjusting a reflection angle of a mirror disposed between the laser oscillator and a laser light entering object to adjust an optical axis position of an invisible wavelength region laser light.

[Patent Literature 1] JP 2001-350166 A

### Summary of Invention

In the method disclosed in the Patent Literature 1, it is necessary to remove a wavelength conversion element used for adjusting an optical axis position of laser light, a condenser lens for condensing light entering the wavelength conversion element, a collimator lens for collimating light emitted from the wavelength conversion element, or the like at the time of processing with laser light. That is, in the method disclosed in the Patent Literature 1, when the optical axis of laser light is adjusted, a dedicated member used only at that time is necessary in addition to the wavelength conversion element, and it is necessary to move the wavelength conversion element and the dedicated member when processing with laser light is performed. Therefore, it takes labor.

Therefore, an object of the present invention is to provide a laser device for easily performing processing with laser light after confirming an irradiation position of the laser light.

A laser device of the present invention includes: a light source capable of emitting infrared light by switching the infrared light between pulsed light and continuous light; and a wavelength conversion element for receiving the infrared light and wavelength-converting the infrared light having an intensity equal to or higher than a first threshold value into visible light. The light source emits at least a part of the pulsed light with an intensity equal to or higher than the first threshold value and emits the continuous light with an intensity less than the first threshold value.

The laser device can wavelength-convert pulsed light having an intensity equal to or higher than the first threshold value into visible light by the wavelength conversion element and suppress wavelength conversion of continuous light having an intensity less than the first threshold value into visible light. Therefore, according to the laser device, by emitting pulsed light from a light source when an irradiation position of laser light is confirmed and emitting continuous light from the light source at the time of processing with laser light, visible light is emitted when the irradiation position of the laser light is confirmed, and a processing object is irradiated with light having an intended wavelength in which wavelength conversion into visible light is suppressed at the time of processing with laser light. As described above, according to the laser device, it is not necessary to make arrangement of members different between at the time of confirming the irradiation position of laser light with visible light and at the time of processing with laser light, and it is possible to perform processing with the laser light after easily confirming the irradiation position of the laser light. Incidentally, when the irradiation position of the laser light is confirmed, high-intensity laser light is emitted. However, this laser light is pulsed light, irradiation time thereof is therefore short, and it is possible to suppress unintentional processing of a processing object.

The laser device preferably includes a Raman converter for generating Raman scattered light from light having an intensity equal to or higher than a second threshold value higher than the first threshold value, in which the light source emits at least a part of the pulsed light with an intensity equal to or higher than the second threshold value, and the wavelength conversion element wavelength-converts the Raman scattered light generated from the pulsed light in the Raman converter into visible light.

Generally, the wavelength conversion element has a wavelength to be easily converted. Therefore, when a wavelength conversion element for wavelength-converting Raman scattered light into visible light is used, it is possible to suppress wavelength conversion of continuous light having a wavelength different from that of Raman scattered light by the wavelength conversion element. Therefore, it is possible to emit light having an intended wavelength necessary for processing at the time of processing with laser light. The wavelength conversion element can suppress wavelength conversion of continuous light having a wavelength different from that of the Raman scattered light. Therefore, loss of light in the wavelength conversion element can be suppressed at the time of processing with laser light.

The light source of the laser device may include a resonator including: an amplification optical fiber having a core containing an active element pumped by the pumping light; a first mirror for reflecting light having at least some of wavelengths of light emitted by the pumped active element, the first mirror being disposed on one side of the amplification optical fiber; and a second mirror for reflecting light having at least some of wavelengths of light reflected by the first mirror with a reflectance lower than that of the first mirror, the second mirror being disposed on the other side of the amplification optical fiber.

In the laser device including the resonator, the intensity of the pumping light is preferably to be higher when the pulsed light is emitted than when the continuous light is emitted.

By setting the intensity of pumping light to be high, the intensity of light emitted from the light source is easily increased. Therefore, by setting the intensity of pumping light to be higher when the pulsed light is emitted than when the continuous light is emitted, it is easy to make a difference between the intensity of the pulsed light and the intensity of the continuous light. Therefore, it is possible to wavelength-convert the pulsed light into visible light by the wavelength conversion element and to further suppress wavelength conversion of the continuous light into visible light.

In the laser device including the resonator, the pulsed light is preferably emitted by repeating emission and stop of the pumping light.

By repeating emission and stop of the pumping light, it is possible to repeat emission and stop of light from a light source. When light is emitted from a light source including a resonator, high intensity light is easily emitted first. Pulsed light having an intensity equal to or higher than the first threshold value can be formed by this high intensity light. Therefore, it is possible to easily emit light having an intensity equal to or higher than the first threshold value as compared with a case of using continuous light. By the way, when light is emitted from a light source including a resonator, a peak value of pulsed light tends to be higher than that of continuous light also when a Q switch is used. When the Q switch is used, a Q value is set to a low value and oscillation of light is suppressed until a very large number of active elements are brought into a pumped state, and the Q value is set to a high value and light is oscillated after the number of the active elements in the pumped state is sufficiently increased. When the Q switch is used, energy stored in the resonator is converted into light and emitted as light at a stroke as described above. Therefore, emitted light tends to be pulsed light with a high peak value. Meanwhile, as described above, when light is emitted from a light source including a resonator, when pulsed light is formed by repeating emission and stop of pumping light, the first part of the pulsed light has an intensity equal to or higher than the first threshold value. Therefore, it is possible to suppress an extreme increase in energy of light having an intensity equal to or higher than the first threshold value. Therefore, it is possible to suppress enter of light having a too high peak intensity to the wavelength conversion element and to suppress damage to the wavelength conversion element.

The laser device including the resonator preferably includes a plurality of the pumping light sources, in which some of the pumping light sources and the other pumping light sources alternately emit the pumping light.

By alternately emitting the pumping light from the plurality of pumping light sources in this way, it is possible to reduce an emission interval of pulsed light emitted from the light sources. Therefore, flickering of visible light caused by wavelength conversion of pulsed light can be suppressed, and it is easier to confirm the irradiation position of laser light with visible light.

The laser device preferably includes: an optical fiber for propagating the infrared light; a quartz block connected to an emission end of the optical fiber; and a condenser lens for condensing the infrared light emitted from the quartz block, in which the wavelength conversion element is disposed at a position overlapping with a focal point of the condenser lens.

By disposing the wavelength conversion element at a position where the infrared light is focused, it is easy to cause high-intensity pulsed light to enter the wavelength conversion element. Therefore, it is easy to wavelength-convert pulsed light into visible light by the wavelength conversion element. Therefore, it is easy to confirm the irradiation position of laser light with visible light.

The laser device preferably includes: an optical fiber for propagating the infrared light; a quartz block connected to an emission end of the optical fiber; and a housing for housing the emission end of the optical fiber and the quartz block, in which the wavelength conversion element is disposed at a position irradiated with the infrared light outside the housing.

By disposing the wavelength conversion element outside the housing in this way, removal of the wavelength conversion element is easy. Therefore, maintenance or the like is easy.

As described above, the present invention provides a laser device for easily performing processing with laser light after confirming an irradiation position of the laser light.

### Brief Description of Drawings

FIG. 1 is a conceptual diagram illustrating a laser device according to a first embodiment of the present invention.
FIG. 2 is a cross-sectional view schematically illustrating the structure of an optical device illustrated in FIG. 1.
FIG. 3A is a diagram illustrating an example of a relationship between the intensity of pumping light and time, and FIG. 3B is a diagram illustrating an example of a relationship between the intensity of each of pulsed light and continuous light and time.
FIG. 4 is a conceptual diagram illustrating a laser device according to a second embodiment of the present invention.
FIG. 5 is a diagram illustrating the intensity and frequency of pulsed light, continuous light, and the like.
FIG. 6 is a cross-sectional view schematically illustrating the structure of an optical device according to a modified example.
FIG. 7A is a diagram illustrating an example of a relationship between the intensity of pumping light and time, and FIG. 7B is a diagram illustrating an example of a relationship between the intensity of each of pulsed light and continuous light and time.

### Description of Embodiments

Hereinafter, preferable embodiments of a laser device according to the present invention will be described in detail with reference to the drawings. The embodiments illustrated below are for facilitating understanding of the present invention and are not intended to limit the present invention. The present invention can be modified and improved without departing from the gist of the present invention. Note that the scale of each of the drawings may be different from the scale described in the following description for facilitating understanding.

### (First embodiment)

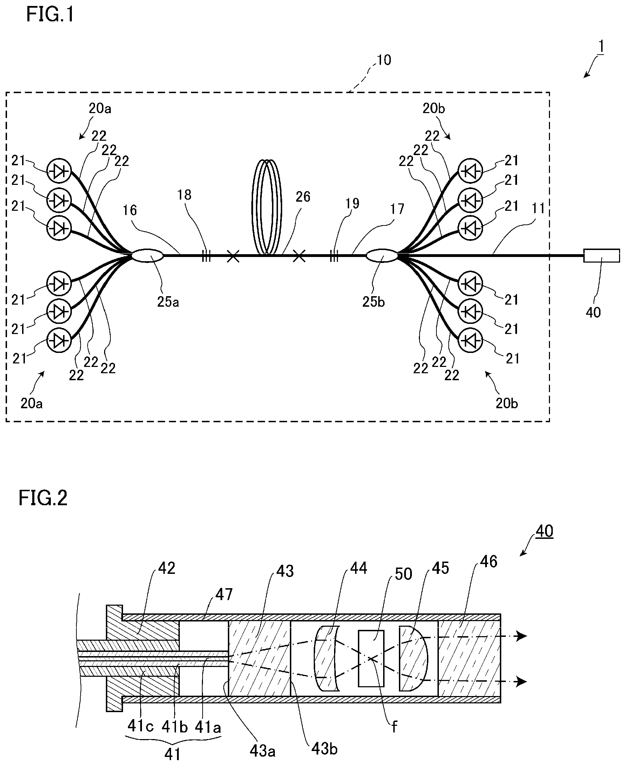

FIG. 1 is a conceptual diagram illustrating a laser device 1 according to the present embodiment. As illustrated in FIG. 1, the laser device 1 of the present embodiment mainly includes a light source 10 and an optical device 40 which light emitted from the light source 10 enters.

The light source 10 illustrated in FIG. 1 mainly includes: pumping light sources 20a and 20b; optical combiners 25a and 25b; an amplification optical fiber 26; a first resonance fiber 16; a second resonance fiber 17; a first fiber Bragg grating (FBG) 18, a second FBG 19, and an optical fiber 11.

Each of the pumping light sources 20a and 20b includes a plurality of laser diodes 21 and pumping fibers 22 connected to the respective laser diodes 21. Examples of the pumping fiber 22 include a multimode fiber. In this case, pumping light emitted from the laser diode 21 is propagated as multimode light through the pumping fiber 22.

The amplification optical fiber 26 has: a core containing an active element such as ytterbium (Yb) pumped by pumping light emitted from the pumping light sources 20a and 20b; a clad covering the core; an outer clad covering the clad; and a covering layer covering the outer clad. The refractive index of the clad is set to be lower than the refractive index of the core, and the refractive index of the outer clad is set to be further lower than the refractive index of the clad.

One end of the first resonance fiber 16 is connected to the pumping light source 20a via the optical combiner 25a, and the other end thereof is connected to one end of the amplification optical fiber 26. Examples of the first resonance fiber 16 include a single mode fiber. The first resonance fiber 16 is a double clad fiber having a core, a clad, and an outer clad. Such a first resonance fiber 16 has, for example, a configuration in which the core contains no active element similarly to that of the amplification optical fiber 26. The core of the first resonance fiber 16 is bonded to the core of the amplification optical fiber 26, and the clad of the first resonance fiber 16 is bonded to the clad of the amplification optical fiber 26.

The core of the first resonance fiber 16 has the first FBG 18 as a first mirror disposed therein. The first FBG 18 is configured to reflect light having at least some of wavelengths of light emitted in a state in which the active element contained in the core of the amplification optical fiber 26 is in a pumped state. The reflectance of the first FBG 18 is higher than the reflectance of the second FBG 19 described later. Light having a desired wavelength out of light emitted by the active element is preferably reflected at 90% or more, and more preferably reflected at 99% or more. Note that the wavelength of light reflected by the first FBG 18 is in an infrared light region. When the active element is ytterbium, the wavelength of the light reflected by the first FBG 18 is, for example, 1060 nm.

The optical combiner 25a connects the first resonance fiber 16 to each of the pumping fibers 22 of the pumping light source 20a. In the optical combiner 25a, the core of the pumping fiber 22 is bonded to the clad of the first resonance fiber 16. Therefore, pumping light emitted from the pumping light source 20a enters the clad of the first resonance fiber 16 via the optical combiner 25a.

One end of the second resonance fiber 17 is connected to the pumping light source 20b via the optical combiner 25b, and the other end thereof is connected to the other end of the amplification optical fiber 26. Examples of the second resonance fiber 17 include a single mode fiber. The second resonance fiber 17 is a double clad fiber having a core, a clad, and an outer clad. Such a second resonance fiber 17 has, for example, a similar configuration to the amplification optical fiber 26 except that the core contains no active element. The core of the second resonance fiber 17 is bonded to the core of the amplification optical fiber 26, and the clad of the second resonance fiber 17 is bonded to the clad of the amplification optical fiber 26.

The core of the second resonance fiber 17 has the second FBG 19 as a second mirror disposed therein. The second FBG 19 is configured to reflect light having least some of wavelengths of light reflected by the first FBG 18 with a reflectance lower than that of the first FBG 18. When light reflected by the first FBG 18 enters the second FBG 19, the second FBG 19 reflects the light with a reflectance of, for example, about 10%.

The optical combiner 25b connects the second resonance fiber 17 to each of the pumping fibers 22 of the pumping light source 20b. In the optical combiner 25b, the core of the pumping fiber 22 is bonded to the clad of the second resonance fiber 17. Therefore, pumping light emitted from the pumping light source 20b enters the clad of the second resonance fiber 17 via the optical combiner 25b.

The optical fiber 11 is connected via the optical combiner 25b to a side of the second resonance fiber 17 opposite to the amplification optical fiber 26. For example, the optical fiber 11 has a core, a clad covering the core, and a covering layer covering the clad, and is a few mode fiber having a core diameter of about 20 µm and capable of propagating light in a fundamental mode and light in a higher mode, for example, 1 to 5 modes.

As described above, the light source 10 includes the resonator including the pumping light sources 20a and 20b, the amplification optical fiber 26, the first FBG 18, and the second FBG 19. This light source 10 is a Fabry-Perot type fiber laser device for performing bilateral pumping to cause enter of pumping light from both the front side and the rear side of the amplification optical fiber 26 and performing resonance between the first FBG 18 and the second FBG 19.

In such a light source 10, first, pumping light is emitted from each of the laser diodes 21 of the pumping light sources 20a and 20b. The pumping light emitted from each of the laser diodes 21 enters the clad of the amplification optical fiber 26 from the front side of the amplification optical fiber 26 via the pumping fiber 22 and the first resonance fiber 16 or from the rear side of the amplification optical fiber 26 via the pumping fiber 22 and the second resonance fiber 17. The pumping light that has entered the clad of the amplification optical fiber 26 is mainly propagated through the clad. When the pumping light passes through the core of the amplification optical fiber 26, the pumping light is absorbed by an active element contained in the core to bring the active element into a pumped state.

In this way, spontaneous emission light is emitted from the active element pumped by the pumping light, and light resonance occurs between the first FBG 18 and the second FBG 19 based on the spontaneous emission light. The resonating light has the same wavelength as the reflection wavelength of each of the first FBG 18 and the second FBG 19. This resonating light is amplified by stimulated emission of the active element pumped in the amplification optical fiber 26 as amplified light. A part of the amplified light passes through the second FBG 19 and enters the optical fiber 11. Incidentally, as described above, the wavelength of light reflected by the first FBG 18 and the second FBG 19 is in an infrared light region of about 0.80 µm to 1.25 µm, for example. Light emitted from the light source 10 is infrared light.

The light source 10 can emit infrared light by switching the infrared light between pulsed light and continuous light. More specifically, the light source 10 is configured to emit pulsed light with an intensity equal to or higher than a first threshold value described later and to emit continuous light with an intensity less than the first threshold value.

FIG. 2 is a cross-sectional view schematically illustrating a part of the optical device 40 illustrated in FIG. 1, and is a cross-sectional view parallel to the central axis of the optical fiber 41. As illustrated in FIG. 2, the optical device 40 mainly includes: an optical fiber 41; a quartz block 43; a condenser lens 44; a wavelength conversion element 50; a collimator lens 45; a protection lens 46; a spacer 42; and a housing 47.

The optical fiber 41 is a part of the optical fiber 11 or another optical fiber connected to the optical fiber 11. The optical fiber 41 has: a core 41a; a clad 41b surrounding the core 41a; and a covering layer 41c covering the clad 41b. At one end of the optical fiber 41, the covering layer 41c is peeled off, and the clad 41b is exposed. One end surface of the optical fiber 41 is fusion-spliced to the quartz block 43 by an oxyhydrogen burner or the like. Such an optical fiber 41 is, for example, an optical fiber having a diameter of the core 41a of about 100 µm and an outer diameter of the clad 41b of about 360 µm.

The quartz block 43 is a columnar body formed of quartz and having an outer diameter larger than the outer diameter of the optical fiber 41. The quartz block 43 is, for example, a columnar body formed of quartz and having a diameter of about 8 mm and a length of about 23 mm. The quartz block 43 has an entering surface 43a to which the end surface of the optical fiber 41 is connected and an emitting surface 43b from which light that enters the quartz block 43 from the optical fiber 41 is emitted. The entering surface 43a is larger than the end surface of the optical fiber 41, and the end surface of the optical fiber 41 is fusion-spliced to the central portion of the entering surface 43a.

The condenser lens 44 is a lens for collecting light emitted from the emitting surface 43b of the quartz block 43. Light emitted from the condenser lens 44 is collected at a focal point f. The collimator lens 45 is a lens for converting light that has passed through the condenser lens 44 into parallel light. Furthermore, light that has been converted into parallel light by the collimator lens 45 is emitted via the protection lens 46. The protection lens 46 is a member for protecting an emission end of the laser device 1.

In the present embodiment, the wavelength conversion element 50 is disposed at a position overlapping with the focal point f. The wavelength conversion element 50 wavelength-converts infrared light having an intensity equal to or higher than the first threshold value into visible light. As such a wavelength conversion element 50, LiNbO3 (LN), LiTaO3 (LT), KTiOP04 (KTP), or the like is used.

The housing 47 is a member for housing an emission end of the optical fiber 41, the quartz block 43, the condenser lens 44, the wavelength conversion element 50, the collimator lens 45, and the protection lens 46. The housing 47 is formed in a cylindrical shape, and one end of the optical fiber 41 is inserted thereinto. One end of the housing 47 is sealed with the protection lens 46. The other end of the housing 47 is sealed with a spacer 42. The spacer 42 has a through hole at the center thereof, and the optical fiber 41 is inserted into the through hole.

Next, operation and effect of the laser device 1 of the present embodiment will be described.

### <When irradiation position of laser light is confirmed>

When infrared light is emitted from the light source 10, the infrared light is propagated through the optical fiber 11 and emitted from the optical device 40 via the optical fiber 11. In the optical device 40, the infrared light enters the wavelength conversion element 50.

Here, as described above, the light source 10 emits pulsed light with an intensity equal to or higher than the first threshold value and emits continuous light with an intensity less than the first threshold value. The wavelength conversion element 50 wavelength-converts infrared light having an intensity equal to or higher than the first threshold value into visible light. Therefore, when an irradiation position of laser light is confirmed, by emitting pulsed light with an intensity equal to or higher than the first threshold value from the light source 10, the pulsed light is wavelength-converted into visible light by the wavelength conversion element 50, and a processing object is irradiated with the visible light. The irradiation position of the laser light can be thereby confirmed. Incidentally, when the irradiation position of the laser light is confirmed, high-intensity laser light is emitted. However, this laser light is pulsed light, irradiation time thereof is therefore short, and it is possible to suppress unintentional processing of a processing object.

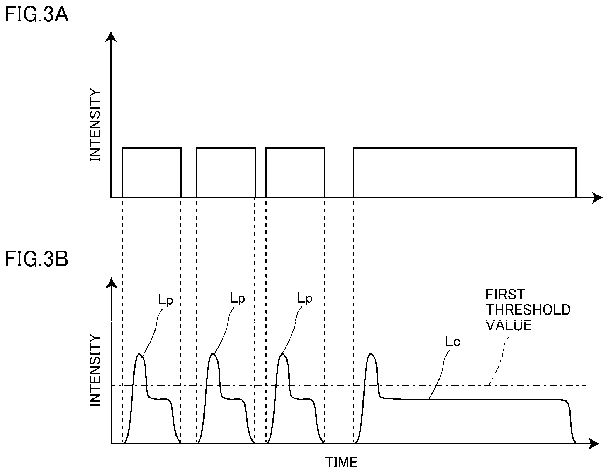

In the present embodiment, by repeating emission and stop of pumping light from the pumping light sources 20a and 20b, it is possible to emit pulsed light equal to or higher than the first threshold value from the light source 10 as described above. A method for emitting pulsed light equal to or higher than the first threshold value from the light source 10 will be described in detail below with reference to FIGS. 3A and 3B. FIG. 3A is a diagram illustrating an example of a relationship between the intensity of pumping light and time, in which the horizontal axis indicates time, and the vertical axis indicates light intensity. FIG. 3B is a diagram illustrating an example of a relationship between the intensity of each of pulsed light and continuous light emitted from the light source 10 and time, in which the horizontal axis indicates time, and the vertical axis indicates light intensity. Note that FIGS. 3A and 3B are conceptual diagrams. The waveforms of the light emitted from the light source 10 and pumping light and the timing of emission of the light may be different from an actual case.

As illustrated in FIG. 3A, by repeating emission and stop of pumping light, emission and stop of light from the light source 10 are repeated as illustrated in FIG. 3B, and pulsed light Lp is emitted. When light is emitted from the light source 10 including a resonator, high intensity light is easily emitted first as illustrated in FIG. 3B. The pulsed light Lp having an intensity equal to or higher than the first threshold value can be formed by this high intensity light. Only the first part of the pulsed light formed in this way has an intensity equal to or higher than the first threshold value. Therefore, it is possible to suppress an extreme increase in energy of light having an intensity equal to or higher than the first threshold value. Therefore, it is possible to suppress suppression of the energy of light entering the wavelength conversion element 50 as compared with a case where continuous light having an intensity equal to or higher than the first threshold value enters the wavelength conversion element, and damage to the wavelength conversion element 50 can be suppressed. Note that FIG. 3A and FIG. 3B illustrate an example in which a plurality of beams of the pulsed light Lp exceeding the first threshold value is emitted. However, the number of beams of the pulsed light Lp exceeding the first threshold value is not particularly limited and may be one.

### <At the time of processing with laser light>

At the time of processing with laser light, as illustrated in FIG. 3B, by emitting the continuous light Lc from the light source 10 with an intensity less than the first threshold value, it is possible to suppress wavelength conversion of the continuous light into visible light in the wavelength conversion element 50. Therefore, at the time of processing with laser light, a processing object is irradiated with light having an intended wavelength in which wavelength conversion into visible light is suppressed. Incidentally, similarly to the pulsed light Lp, the continuous light Lc tends to emit high intensity light first. In this case, it can be understood that the high intensity light is regarded as the pulsed light Lp and continuous light is emitted following the pulsed light Lp. However, since the high intensity light is emitted for a short time like the pulsed light Lp, it is possible to suppress an influence of the high intensity light on processing with laser light.

As described above, according to the laser device 1, it is not necessary to make arrangement of members different between at the time of confirming the irradiation position of laser light with visible light and at the time of processing with laser light, and it is possible to perform processing with the laser light after easily confirming the irradiation position of the laser light.

The laser device 1 of the present embodiment includes the condenser lens 44 for condensing infrared light as described above, in which the wavelength conversion element 50 is disposed at a position overlapping with the focal point f of the condenser lens 44. The wavelength conversion element 50 is disposed at a position where the infrared light is condensed in this way, and high-intensity pulsed light easily enters the wavelength conversion element 50. Therefore, the pulsed light can be easily wavelength-converted into visible light by the wavelength conversion element 50. Therefore, it is easier to confirm the irradiation position of laser light with visible light.

### (Second embodiment)

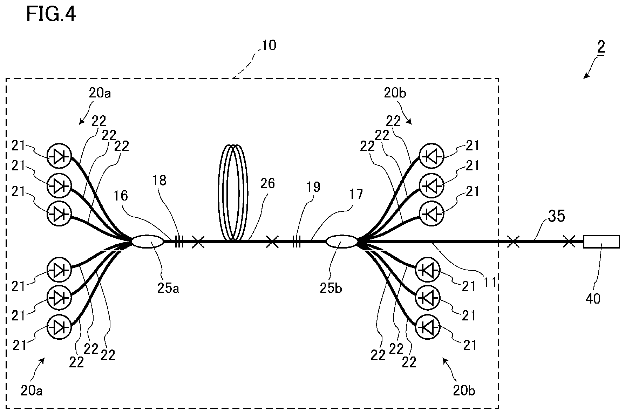

Next, a second embodiment of the present invention will be described in detail with reference to FIG. 4. Note that constituent elements the same as or equivalent to those in the first embodiment are denoted by the same reference numerals, and duplicate description will be omitted unless otherwise described.

FIG. 4 is a conceptual diagram illustrating a laser device 2 according to the present embodiment. As illustrated in FIG. 4, the laser device 2 of the present embodiment is different from the laser device 1 of the first embodiment in including a Raman converter 35.

Light emitted from an optical fiber 11 enters the Raman converter 35. The Raman converter 35 includes an optical fiber and is configured to generate Raman scattered light when light having an intensity equal to or higher than a second threshold value higher than a first threshold value enters the Raman converter 35. Light emitted from the Raman converter 35 enters an optical device 40.

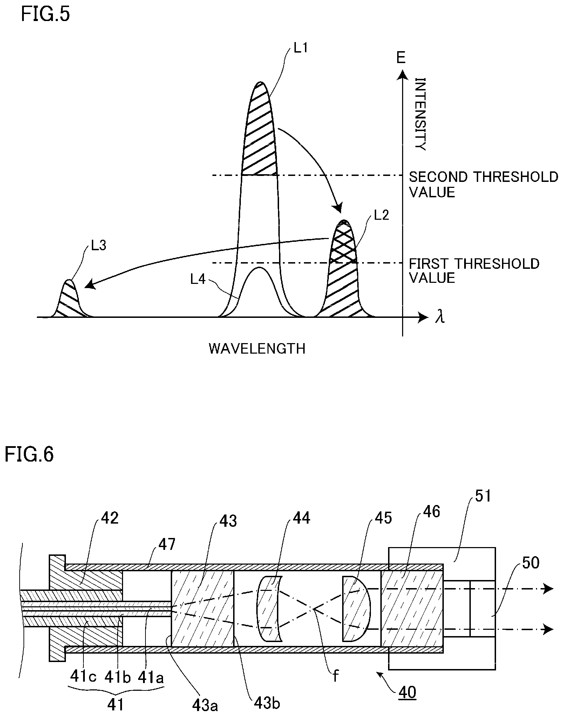

In the laser device 2 of the present embodiment, a light source 10 is configured to emit pulsed light having an intensity equal to or higher than the second threshold value. Therefore, pulsed light emitted from the light source 10 generates Raman scattered light in the Raman converter 35. Meanwhile, since continuous light emitted from the light source 10 has an intensity less than the first threshold value, the intensity is less than the second threshold value. Therefore, it is possible to suppress generation of Raman scattered light from continuous light emitted from the light source 10. A wavelength conversion element 50 of the present embodiment wavelength-converts Raman scattered light generated from pulsed light in this way into visible light. A relationship between the wavelength and intensity of the light is illustrated in FIG. 5. In FIG. 5, the vertical axis indicates light intensity, and the horizontal axis indicates light frequency.

In FIG. 5, L1 represents pulsed light emitted from the light source 10, L2 represents Raman scattered light generated from the pulsed light L1 in the Raman converter 35, L3 represents visible light generated by converting the Raman scattered light L2 by the wavelength conversion element 50, and L4 represents continuous light emitted from the light source 10. As illustrated in FIG. 5, the pulsed light L1 emitted from the light source 10 has an intensity higher than the second threshold value, and a part of the pulsed light L1 becomes the Raman scattered light L2 in the Raman converter 35. The Raman scattered light L2 has an intensity higher than the first threshold value, and a part of the Raman scattered light L2 is wavelength-converted into the visible light L3 in the wavelength conversion element 50. The continuous light L4 emitted from the light source 10 has an intensity lower than the first threshold value and the second threshold value. In the Raman converter 35 and the wavelength conversion element 50, generation of beams of light having different wavelengths from the continuous light L4 is suppressed.

Generally, the wavelength conversion element 50 has a wavelength to be easily converted. Therefore, when the wavelength conversion element 50 for wavelength-converting Raman scattered light into visible light is used as described above, it is possible to suppress wavelength conversion of pulsed light or continuous light having a wavelength different from that of Raman scattered light by the wavelength conversion element 50. Therefore, it is possible to emit light having an intended wavelength necessary for processing at the time of processing with laser light. The wavelength conversion element 50 can suppress wavelength conversion of continuous light having a wavelength different from that of the Raman scattered light. Therefore, loss of light in the wavelength conversion element 50 can be suppressed at the time of processing with laser light. However, depending on the type of the wavelength conversion element 50, light having an intensity exceeding the first threshold value among beams of the pulsed light L1 may be wavelength-converted by the wavelength conversion element 50. In this case, a part of the pulsed light L1 is converted into visible light or ultraviolet light having a shorter wavelength than the visible light L3.

As the wavelength conversion element 50 of the present embodiment, LiNbO₃ (LN), LiTaO₃ (LT), KTiOPO₄ (KTP), or the like is used, for example, when the wavelength of infrared light emitted from the light source 10 is 1000 to 1100 nm, and the wavelength of Raman scattered light generated in the Raman converter 35 from pulsed light emitted from the light source 10 is 1050 to 1150 nm.

The present invention has been described by exemplifying the first and second embodiments, but the present invention is not limited thereto.

In the above embodiments, an example in which the wavelength conversion element 50 is disposed at a position overlapping with the focal point f of the condenser lens 44 has been described. However, the present invention is not limited to the embodiments, and it is only required to dispose the wavelength conversion element 50 such that a processing object is irradiated with infrared light emitted from a laser device via the wavelength conversion element 50. For example, the wavelength conversion element 50 may be disposed between the quartz block 43 and the condenser lens 44, and the wavelength conversion element 50 may be disposed between the collimator lens 45 and the protection lens 46. When the wavelength conversion element 50 is disposed as described above, the energy density of light entering the wavelength conversion element 50 is lower than that when the wavelength conversion element 50 is disposed at a position overlapping with the focal point f. Therefore, breakage of the wavelength conversion element 50 is easily suppressed. Furthermore, the wavelength conversion element 50 may be disposed outside the housing 47 as illustrated in FIG. 6. FIG. 6 is a cross-sectional view illustrating an emission end of a laser device according to a modified example in the same viewpoint as FIG. 2. In FIG. 6, constituent elements the same as or equivalent to those in FIG. 2 are denoted by the same reference numerals, and duplicate description will be omitted. In the example illustrated in FIG. 6, the wavelength conversion element 50 is disposed by a mounting mount 51 at a position irradiated with infrared light outside the housing 47. By disposing the wavelength conversion element 50 outside the housing 47 in this way, removal of the wavelength conversion element 50 is easy. Therefore, maintenance or the like is easy.

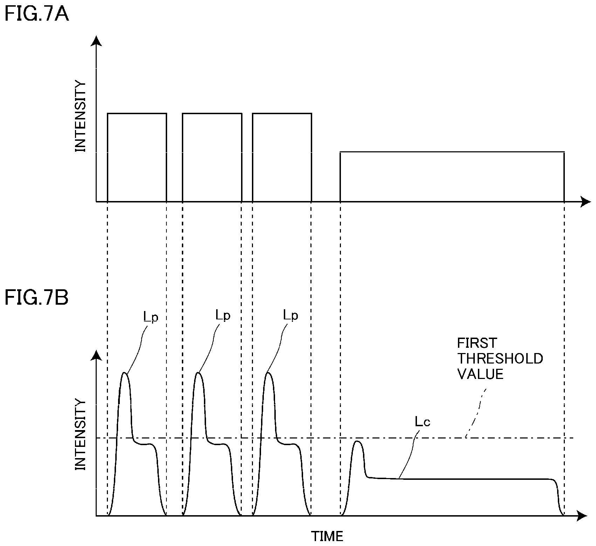

In the above embodiment, a method for emitting pulsed light by repeating emission and stop of pumping light from the pumping light sources 20a and 20b has been exemplified, but the present invention is not limited to the embodiments. For example, also by setting the intensity of pumping light emitted from the pumping light sources 20a and 20b to be higher when pulsed light is emitted from the light source 10 than when continuous light is emitted, as described above, pulsed light equal to or higher than the first threshold value can be emitted. Description will be made in detail below with reference to FIGS. 7A and 7B. FIG. 7A is a diagram illustrating another example of a relationship between the intensity of pumping light and time, in which the horizontal axis indicates time, and the vertical axis indicates light intensity. FIG. 7B is a diagram illustrating another example of a relationship between the intensity of each of pulsed light and continuous light emitted from the light source 10 and time, in which the horizontal axis indicates time, and the vertical axis indicates light intensity. Note that FIGS. 7A and 7B are conceptual diagrams. The waveforms of the light emitted from the light source 10 and pumping light and the timing of emission of the light may be different from an actual case.

As illustrated in FIG. 7A, by setting the intensity of pumping light emitted from the pumping light sources 20a and 20b to be high, the intensity of the light emitted from the light source 10 can be easily increased as illustrated in FIG. 7B. Therefore, by setting the intensity of pumping light to be higher when the pulsed light Lp is emitted than when the continuous light Lc is emitted, it is easy to make a difference between the intensity of the pulsed light Lp and the intensity of the continuous light Lc. Therefore, it is easy to wavelength-convert the pulsed light Lp into visible light by the wavelength conversion element 50 and to suppress wavelength conversion of the continuous light Lc into visible light.

A Q switch may be disposed such that pulsed light equal to or higher than the first threshold value and continuous light less than the first threshold value can be emitted by the Q switch.

In the above description, an example in which pulsed light is emitted at an interval has been described. However, the interval of the pulsed light may be narrowed, or the pulsed light may be emitted from the light source 10 such that beams of the pulsed light overlap with each other. For example, by alternately emitting pumping light from some of the plurality of pumping light sources 20a and 20b and other pumping light sources 20a and 20b, an emission interval of the pulsed light emitted from the light source 10 can be narrowed. Examples thereof include alternate emission of pumping light from the pumping light source 20a and the pumping light source 20b. By alternately emitting pumping light from the plurality of pumping light sources in this way, flickering of visible light caused by wavelength conversion of the pulsed light emitted from the light source 10 in the wavelength conversion element 50 can be suppressed, and it is easier to confirm the irradiation position of the laser light with visible light.

The above embodiments have exemplified a form including one light source 10, but the number of the light sources is not particularly limited, and a plurality of light sources may be used. The light source may be a solid laser or the like.

As described above, the present invention provides a laser device for easily performing processing with laser light after confirming an irradiation position of the laser light, and use thereof in the field of a processing method using a laser or the like is expected.

### Reference Signs List

- 1, 2: laser device
- 10: light source
- 11: optical fiber
- 18: first FBG
- 19: second FBG
- 20a, 20b: pumping light source
- 21: laser diode
- 22: pumping fiber
- 26: amplification optical fiber
- 35: Raman converter
- 44: condenser lens
- 47: housing
- 50: wavelength conversion element
- Lp: pulsed light
- Lc: continuous light

## Claims

1. A laser device comprising:
a light source capable of emitting infrared light by switching the infrared light between pulsed light and continuous light; and
a wavelength conversion element for receiving the infrared light and wavelength-converting the infrared light having an intensity equal to or higher than a first threshold value into visible light, wherein
the light source emits at least a part of the pulsed light with an intensity equal to or higher than the first threshold value and emits the continuous light with an intensity less than the first threshold value.

2. The laser device according to claim 1, comprising a Raman converter for generating Raman scattered light from light having an intensity equal to or higher than a second threshold value higher than the first threshold value, wherein
the light source emits at least a part of the pulsed light with an intensity equal to or higher than the second threshold value, and
the wavelength conversion element wavelength-converts the Raman scattered light generated from the pulsed light in the Raman converter into visible light.

3. The laser device according to claim 1 or 2, wherein the light source includes a resonator including:
a pumping light source for emitting pumping light;
an amplification optical fiber having a core containing an active element pumped by the pumping light;
a first mirror for reflecting light having at least some of wavelengths of light emitted by the pumped active element, the first mirror being disposed on one side of the amplification optical fiber; and
a second mirror for reflecting light having at least some of wavelengths of light reflected by the first mirror with a reflectance lower than that of the first mirror, the second mirror being disposed on the other side of the amplification optical fiber.

4. The laser device according to claim 3, wherein an intensity of the pumping light is set to be higher when the pulsed light is emitted than when the continuous light is emitted.

5. The laser device according to claim 3 or 4, wherein the pulsed light is emitted by repeating emission and stop of the pumping light.

6. The laser device according to any one of claims 3 to 5, comprising a plurality of the pumping light sources, wherein
some of the pumping light sources and the other pumping light sources alternately emit the pumping light.

7. The laser device according to any one of claims 1 to 6, comprising:
an optical fiber for propagating the infrared light;
a quartz block connected to an emission end of the optical fiber; and
a condenser lens for condensing the infrared light emitted from the quartz block, wherein
the wavelength conversion element is disposed at a position overlapping with a focal point of the condenser lens.

8. The laser device according to any one of claims 1 to 6, comprising:
an optical fiber for propagating the infrared light;
a quartz block connected to an emission end of the optical fiber; and
a housing for housing the emission end of the optical fiber and the quartz block, wherein
the wavelength conversion element is disposed at a position irradiated with the infrared light outside the housing.
